# EUROPEAN PATENT APPLICATION

(11) **EP 4 052 584 A1**
(43) Date of publication of application: **07.09.2022**
(21) Application number: 22163753.1
(22) Date of filing: 22.03.2016
(51) Int. Cl.: A23G 4/10

(54) **CHEWING GUM COMPOSITION COMPRISING CRYSTALLINE ALLULOSE PARTICLES**

(30) Priority: 31.03.2015 US 201562140601 P
(62) Divisional of application: 16711819.9
(71) Applicant: ROQUETTE FRERES, 62136 Lestrem (FR)
(72) Inventor: PARADY, Tom, BATAVIA, 60510 (US); KLEINER, Leslie, GENEVA, 60134 (US); ZHOU, Liuming, GENEVA, 60134 (US)
(74) Representative: Plasseraud IP

(57) **Abstract**

The present invention pertains to a chewing gum composition comprising crystalline allulose particles and optionally an aqueous allulose syrup, and to the use of allulose for increasing the hardening rate of chewing gum compositions.

## Description

The present invention pertains to a chewing gum composition comprising crystalline allulose particles and optionally an aqueous allulose syrup and to the use of allulose for increasing the hardening rate of chewing gum compositions.

### BACKGROUND OF THE INVENTION

All chewing gums are made from compositions comprising a gum base and crystallized sugars and/or sweeteners. The gum base is usually made of one or two elastomers which determine the elasticity of the gum, waxes lowering the softening point, mineral fillers that improve mechanical properties, an antioxidant that protects the gum during manufacture and storage, and binders. The relative ratio of these ingredients determines the type of gum (chewing gum or bubble gum). The composition may also include various additives such as flavorings, dyes, plasticizers, emulsifiers, stabilizers and gelling agents. Usually, the sugars and/or sweeteners and the additives are mixed with the gum base in a mixing bowl for 15 to 20 minutes. At the end of kneading, the dough reaches a temperature of about 50°C. It is then extruded into sheets which are cut into strips or cores also called centers. After cooling, the strips or the centers are maintained at controlled temperature and humidity for 6 to 48 hours in order to harden. Following this step, the strips are wrapped in an aluminum packaging to preserve their flavor, then packed. The centers are coated before being packed in cardboard or plastic packaging.

Sugar-free chewing gum now represents about 90% of market shares in most European countries. Polyols rank the first position in the production of sugar-free chewing gums, in view of their sweetness and low caloric value. In addition, the lower glycemic index of polyols, as compared to sugars such as sucrose and glucose, makes them suitable in the management of diabetes or in weight management. Furthermore, the well-established dental benefits of using polyols, such as xylitol, instead of conventional sweeteners, such as sucrose (e.g., dramatic reductions in new tooth decay, arrest and, in some instances, reversal of existing dental decay) make polyols desirable for use as alternative sweeteners. However, a review of the recent literature of polyols demonstrates that, despite their many advantages, they may result in unpleasant side effects which include lower abdominal pain, bloating or even acute, non-infectious, non-inflammatory diarrhea. For this reason, some people, especially those with intestinal sensitivity, avoid chewing gums containing polyols.

Therefore, sucrose would be best suited to these people. However, it has been found that sucrose raises manufacturing issues. Specifically, conventional sugar-based compositions require a rather long hardening time before the gum may be coated without altering its shape or packaged without sticking to its wrapper. This step thus adds significant cost to the process.

The inventors have now found that D-allulose increased the hardening rate of the chewing gum composition compared with sucrose and could thus be used in the manufacture of chewing gums on an industrial scale, as an alternative to polyols.

D-allulose, also called D-psicose, has 70% of the relative sweetness of sucrose but a caloric value of 0.2 Kcal/g only. It is a C-3 epimer of D-fructose, which belongs to "rare sugars". D-allulose can be produced from D-fructose by D-tagatose 3-epimerase (DTEase) family enzymes which have been found in various micro-organisms.

Surprisingly, it has been observed that the enhanced kinetics obtained with allulose could not be provided by fructose, despite its high similarity with allulose.

Moreover, D-allulose has been found to have a positive effect on the reduction of the glycemic response induced by the ingestion of maltose and sucrose (Matsuo T. et al., J. Jpn. Soc. Nutr. Food Sci. 2006;59:119-121).

Therefore, this invention has also proven to be useful in the manufacture of sugar-based chewing gums, in order to increase their hardening rate while lowering their glycemic index.

It has already been proposed to use allulose, including crystalline allulose, in the manufacture of chewing gums (WO 2014/161977; EP 2 090 180; US 2013/344008).

However, they comprise allulose particles with a particle size which is not appropriate for most chewing gums. Furthermore, it has never been suggested that allulose could itself improve the hardening rate of such compositions compared to similar sucrose-based compositions.

### SUMMARY

This invention is thus directed to a chewing gum composition comprising crystalline allulose particles and optionally an aqueous allulose syrup, wherein said allulose particles have a mean particle size of less than 250 µm.

It also pertains to the use of allulose for increasing the hardening rate of a chewing gum composition, and to a method for increasing the hardening rate of a chewing gum composition, comprising mixing crystalline allulose particles and optionally an aqueous allulose syrup with a molten gum base and one or more food additives, then kneading said mixture so as to obtain a composition having a hardening rate higher than the same composition without said allulose particles.

This invention is further directed to a process for the manufacture of a chewing gum, comprising the step of mixing crystalline allulose particles and optionally an aqueous allulose syrup with a molten gum base and one or more food additives, so as to obtain a chewing gum composition, wherein said allulose particles have a mean particle size of less than 250 µm.

### DETAILED DESCRIPTION

The chewing gum composition according to this invention comprises crystalline allulose particles, wherein said allulose particles have a mean particle size of less than 250 µm. Preferably, these allulose particles have a mean particle size larger than 45 µm.

In the context of this description, "allulose" refers to D-allulose or L-allulose. However D-allulose is preferred in the present invention, because it is easier to obtain.

The mean particle size of allulose is determined by means of a laser diffraction analyzer such as that marketed by BECKMAN-COULTER as "LS 230", using the instructions for use provided by the supplier. The experimental conditions are determined such that the optical concentration is comprised between 4° and 12°, preferably 8°. The results are calculated as volume percent and expressed in µm.

In a preferred embodiment, the allulose particles are selected in such a way that at least 90% by weight, preferably at least 95% by weight and still preferably 100% by weight, of the allulose particles pass through a sieve with apertures of at most 250 µm, preferably of at most 220 µm. Sieving may be performed by means of a sieve shaker. Sieving may be performed by means of an RX-29 model RO-TAP machine (supplied by W.S. Tyler, USA) equipped with a series of sieves, in which the bottom sieve is a US Standard Testing Sieve N70 (Tyler equivalent 65 mesh) accounting for 212 µm..

Crystalline allulose may be prepared as follows.

A D-allulose syrup is first obtained by epimerization of D-fructose at C-3 catalyzed by an enzyme of the D-tagatose 3-epimerase family (DTEase, EC 5.1.3.-). The raw material used for the epimerization may be crystalline fructose with a purity about 99%, for instance. It may be diluted with water to about 45% and magnesium chloride may be added thereto before enzymatic epimerization. To date, at least five DTEases from different organisms have been characterized and employed for D-allulose synthesis. They are commercially available. A putative DTEase from *Agrobacterium tumefaciens* can also be used, and due to its high substrate specificity towards D-allulose, this enzyme was renamed as D-allulose (D-allulose) 3-epimerase (DPEase, EC 5.1.3.-). In an embodiment, the D-allulose 3-epimerase is selected from a D-tagatose 3-epimerase from *Pseudomonas cichorii,* a D-allulose 3-epimerase from *Agrobacterium tumefaciens,* a D-allulose 3-epimerase from *Clostridium sp,* a D-allulose 3-epimerase from *Clostridium scindens,* a D-allulose 3-epimerase from *Clostridium bolteae,* a D-allulose 3-epimerase from *Ruminococcus sp,* and a D-allulose 3-epimerase from *Clostridium* 20 *cellulolyticum.* In a preferred embodiment, the parent D-allulose 3-epimerase is a D-allulose 3-epimerase from *Clostridium cellulolyticum,* more particularly *Clostridium cellulolyticum* strain H10 (ATCC 35319). According to another embodiment, a variant of a parent D-psicose 3-epimerase is used, as described in WO 2015/032761.

The resulting allulose syrup may then be passed through microfiltration to remove any insoluble particles, then subjected to carbon filtration to remove its color, and then to a demineralization step on an ion exchange column to further remove minerals and other impurities. The syrup can then be concentrated using a conventional evaporator, for instance. This allulose syrup may further be subjected to an enrichment step by chromatography, for instance by passing it through a chromatographic simulated moving bed (SMB) with a calcium ion exchange resin. This syrup may be further concentrated before being crystallized. Crystallization may be carried out by cooling the concentrated allulose syrup following saturation curve. After crystallization, the crystal cake may be recovered by centrifugation and then washed. The resulting allulose crystals may then be dried.

The crystalline powdered allulose may further subjected to a grinding process in order to reduce its mean particle size to less than 250 µm, in case there are not enough particles below this mean particle size. Preferably, this grinding process is performed by continuous dry mechanical grinding. Numerous mills are available for such grinding, for instance mills equipped with blades or with rotor/stator, squirrel cage mills, oscillating, conical or cylindrical sieve mills, hammer mills and so on.

Due to the specific crystalline allulose particles used, the composition of this invention reaches at least 90% of its maximum hardness within 8 hours, preferably within 6 hours and more preferably within 3 hours. The hardness of the gum composition may be measured as explained in the following examples.

In addition to the crystalline allulose particles, an aqueous allulose syrup may be included in this composition. Usually, this syrup contains at least 95% allulose, based on total syrup dry weight. Such an allulose syrup may be prepared according to the process described above, following the successive steps before crystallization.

Usually, allulose represents from 40 to 90% by weight, and preferably from 50 to 65% by weight, relative to the total weight of the gum composition, either as crystalline allulose particles or as a mixture of crystalline allulose particles and aqueous allulose syrup. In the case where the composition comprises both crystalline allulose particles and an aqueous allulose syrup, the latter preferably represents (in dry weight) from 1 to 10% of the total weight of allulose particles in the composition.

The chewing gum composition typically includes at least one gum base. Preferably, the gum base content in the composition according to the invention varies from 15 to 60% by weight, more preferably from 20 to 40% by weight and still more preferably between 25 and 35% by weight. Any kind of gum base may be used in the composition, depending on the type of chewing gum being manufactured. It usually comprises one or more natural or synthetic polymers, oils, waxes, fillers, plasticizers, emulsifiers, dyes, anti-oxidants and mixtures thereof.

This composition may further comprise one or more food additives, which will now be described.

Among them, mention can first be made of at least one carbohydrate other than allulose, selected from sucrose, fructose, glucose, maltose, trehalose and mixtures thereof, preferably sucrose and/or fructose. As mentioned previously, blending sucrose with allulose thus allows decreasing the glycemic index of the conventional sugar-based chewing gum manufactured from said composition.

The composition of this invention may further comprise a hydrogenated starch hydrolysate or hydrogenated glucose syrup, which mainly contains maltitol to improve the plasticity of this composition. These syrups and their manufacturing process are well known. They have been described, *inter alia,* in FR-A-2.654.308 and FR-A-2.459.002. They are usually produced by enzymatic and/or acidic hydrolysis of starch followed by hydrogenation at high temperature using Raney nickel as a catalyst. Examples of such syrups are marketed by ROQUETTE under the trade name Lycasin^{®}. The dry weight content of these syrups in the composition may range from 1 to 10%, and preferably from 1 to 5%, of the composition total dry weight.

Apart from this starch hydrolysate, it is preferred that the composition comprises less than 5 wt. % of sugar alcohol(s). In an embodiment of this invention, the sugar alcohol(s) further represent(s) less than 5 parts by weight per 100 parts by weight of allulose. Sugar alcohols are obtained from the reduction of a carbohydrate, whereby the carbonyl group (C=O) of a monosaccharide unit is replaced with a CHOH moiety. Examples of sugar alcohols are sorbitol, mannitol, maltitol, xylitol, erythritol, isomalt and mixtures thereof. According to a preferred embodiment, the composition comprises mannitol powder in an amount from more than 0 to less than 5%, preferably with a mean diameter of less than 200 µm, and still preferably two different types of mannitol powders, one of which has a mean diameter of between 20 and 90 µm and the other of which has a mean diameter of between 100 and 200 µm. Examples of mannitol powders are available from ROQUETTE under the trade name Pearlitol^{®}. The mannitol powder(s) may represent from 1 to 10% of the composition total dry weight.

Moreover, the composition according to this invention preferably comprises less than 1.5% of glycerin, more preferably from 0 to 1% glycerin, and still preferably no glycerin, relative to the total weight of the composition.

This composition may include one or several intense sweetener(s). Intense sweeteners are food additives that have a relative sweetness many times that of sugar, which means they can be used in much smaller amounts. They are added to foods to replace the sweetness normally provided by sugars without contributing significantly to available energy. Examples of intense sweeteners are alitame, acesulfame potassium (Ace K), aspartame, advantame, cyclamate, neotame, saccharin, sucralose, steviol glycosides and thaumatin. According to an embodiment of this invention, when intense sweeteners are present, they represent less than about 0.008 parts by weight per 100 parts by weight of allulose.

The composition of this invention may include one or more other food additives such as flavoring agents, dyes, antioxidants and mixtures thereof. Flavoring agents can contain natural and/or synthetic constituents. They can comprise, in particular, flavors of mint, orange, lemon, and other fruits or plants, for example flavors of apple, strawberry, banana, cherry or mixtures of fruits. When present, the flavoring agent is used in an appropriate amount that can easily be determined by a person skilled in the art, depending on the kind of gum base, the amount of the gum base, the type of chewing gum and the characteristics of said flavoring agents.

The composition of this invention may be prepared according to the following process.

During the first step, allulose is mixed with a gum base using a kneading machine comprising for instance 2 Z-shaped blades. Usually, the complete cycle of the operation lasts from 15 to 20 minutes and the ingredients are added as the kneading proceeds in the kneading machine. In order to render the gum base malleable, the latter is heated beforehand and during mixing. At the end of kneading, the temperature of the dough is approximately 50° C. The mixing step is followed by a step of extrusion under hot conditions in order to obtain a sheet of chewing gum which is narrower or wider according to the device used. At this point, a dusting agent such as fine particles of mannitol or an anti-caking agent such as silica may be applied to the sheet in order to decrease its stickiness. In order to reduce the thickness of the sheet obtained, a rolling step is then provided. During this step, the sheet passes successively between several pairs of rollers of decreasing separation. The rolling step is followed by a final step of forming/cutting, which can lead to a strip of gum or to a tablet.

The tablet thus obtained may be used as a core and further coated with, e.g., a coating syrup comprising one or more sweeteners (carbohydrates and/or sugar alcohols and/or intense sweeteners) and optionally binders, dyes and so on. Alternatively, the strip of gum may be directly packaged in a wrapping paper.

### EXAMPLES

This invention will be better understood in light of the following examples which are given for illustrative purposes only and do not intend to limit the scope of the invention, which is defined by the attached claims.

### Example 1: Manufacture of chewing gums

### 1A- Preparation of allulose syrup and crystalline allulose powder

An allulose syrup was first prepared as follows: crystalline fructose with a purity of at least 99 % was dissolved in water to about 45 % dry substance. Alternatively, a fructose syrup with a purity of at least 95% may be used as a starting material. The syrup was allowed to react with an epimerization enzyme at 55.0°C, at a pH of 6.75. After 30 hours of reaction, the syrup was collected. The resulted syrup had 25.2 % allulose and 74.8 % fructose using standard HPLC method. This syrup was passed through microfiltration to remove insoluble cell mass of enzyme, then carbon filtration to remove color, and then demineralization on cation and anion ion exchange column to further remove minerals and other impurities. The syrup was then concentrated to a dry solid content of about 60 % using conventional evaporator. The concentrated allulose syrup was passed through a simulated moving bed chromatograph column (SMB) with calcium form resin. The resulting syrup had an allulose content of about 95 %.

Part of the resulting syrup was evaporated and concentrated to about 77% solids to provide an allulose syrup that was used in the compositions of this invention.

The remaining of the allulose syrup from the SMB was further concentrated to 85 % dry substance using a conventional evaporator, then fed into a pilot batch cooling crystallizer to produce crystalline allulose. The crystallization conditions were 50°C at the start of crystallization and 20°C for 90 hours. Crystals from crystallizer were centrifuged at 1700 rpm. The resulted crystals were then dried using fluidized bed, by increasing the temperature from 25°C to 90°C and then cooling down to 25°C for a total duration of 4 hours.

The crystalline allulose thus obtained was grinded using a Universal Mill M20 (IKA, Staufen, Germany) and then sieved to less than 212 µm using a RO-TAP sieving shaker comprised of a series of sieves. The bottom sieve was a "US Standard Testing Sieve" No. 70.

### 1B- Chewing gum with crystalline allulose

Chewing gums were prepared using the composition as described below, wherein the allulose powder was prepared as mentioned above:

| | |
|---|---|
| Gum base⁽¹⁾ | 28.00% |
| Allulose powder | 60.60% |
| Mannitol powder (mean diameter: 160 µm)⁽²⁾ | 3.70% |
| Mannitol powder (mean diameter: 50 µm)⁽³⁾ | 0.10% |
| Hydrogenated glucose syrup⁽⁴⁾ diluted to 60% ds | 4.40% |
| Intense sweeteners ⁽⁵⁾ | 0.20% |
| Flavors | 3.00% |

| | |
|---|---|
| ⁽¹⁾ Optima^{®} supplied by CAFOSA ⁽²⁾ Pearlitol^{®} 160C from ROQUETTE ⁽³⁾ Pearlitol^{®} 50 C from ROQUETTE ⁽⁴⁾ Lycasin^{®} 80/55 from ROQUETTE ⁽⁵⁾ GumSweet^{®} supplied by SWEETENER SOLUTIONS | |

The gum base was soften and the allulose and mannitol powders were tempered at about 55°C for at least 4 hours. The gum base, about 60% of the allulose powder, the mannitol powders and half of the maltitol syrup were then mixed together at 50°C in a gum mixer. The intense sweeteners, the remaining allulose powder, the remaining maltitol syrup and the flavors were then successively added. The mixer was stopped and the composition thus obtained was removed therefrom. It was rolled out to 5 mm thick sheets for further testing.

### 1C- Chewing gum with crystalline allulose and allulose syrup

Chewing gums were prepared as described in Example 1A, except that the composition was as described below:

| | |
|---|---|
| Gum base⁽¹⁾ | 28.00% |
| Allulose powder | 58.00% |
| Allulose syrup | 3.50% |
| Mannitol powder (mean diameter: 160 µm)⁽²⁾ | 3.70% |
| Mannitol powder (mean diameter: 50 µm)⁽³⁾ | 0.10% |
| Hydrogenated glucose syrup⁽⁴⁾ diluted to 60% ds | 3.50% |
| Intense sweeteners ⁽⁵⁾ | 0.20% |
| Flavors | 3.00% |

| | |
|---|---|
| ⁽¹⁾ Optima^{®} supplied by CAFOSA ⁽²⁾ Pearlitol^{®} 160C from ROQUETTE ⁽³⁾ Pearlitol^{®} 50 C from ROQUETTE ⁽⁴⁾ Lycasin^{®} 80/55 from ROQUETTE ⁽⁵⁾ GumSweet^{®} supplied by SWEETENER SOLUTIONS | |

### Example 2: Evaluation of hardening rate

The hardness of the chewing gum described in Example 1B and 1C was tested 1h, 2.5h and 6h after manufacture, using a TA HD Plus Texture Analyzer supplied by STABLE MICROSYSTEM, with a 4mm cylindrical probe, a 30kg load cell and a Peltier control unit (also supplied by STABLE MICROSYSTEM) set to 25°C. Time zero was measured one hour after cutting the 5mm rolled gum.

The reproducibility of the experiment was assessed by preparing a larger batch of the composition as described in Example 1B, which is referred to as Composition 1B-1. Moreover, comparative Compositions 2A (sucrose-based gum) and 2B (fructose-based gum) were prepared as described in Example 1B, except that allulose was replaced by the same amount of sucrose and fructose powders screened to less than 212 µm, respectively.

The average hardness value obtained after ten runs was calculated for each time and identified as H₁, H_{2.5} and H_{6.} The hardening rate was then calculated using the following formula: HR = (H_{2.5} - H₁) / 1.5 for Compositions 1B, 1B-1, 2A and 2C. For Composition 1C, it was calculated using 3 points (H₁, H_{2.5} and H₆) to fit a line (y = mx + b) in which m represents the slope and represents the hardening rate.

The results of these experiments are summarized in the table below.

| Composition | Hardening rate | |
|---|---|---|
| | (g-force/h) | (N/h) |
| 1B | 305.33 | 2.99 |
| 1B-1 | 327.70 | 3.21 |
| 1C | 90.65 | 0.89 |
| 2A | 5.73 | 0.06 |
| 2B | 216.47 | 2.12 |

As evident from this table, allulose crystalline powder provides the composition with a higher hardening rate compared to sucrose and even to fructose, despite the high similarity between the chemical structures of allulose and fructose. An enhanced hardening rate compared to sucrose is also observed in the case where crystalline allulose is mixed with allulose syrup, although a slower hardening rate is obtained compared to fructose.

### Example 3: Evaluation of hardening total time

In the experiment described in Example 2, the hardness of the various samples was further measured at 120h and expressed as H₁₂₀. The average hardness values measured are summarized in the following table.

| Composition | H_{2.5} | | H₁₂₀ | | H_{2.5} / H₁₂₀ (%) |
|---|---|---|---|---|---|
| | (g-force) | (N) | (g-force) | (N) | |
| 1B | 2436 | 23.87 | 2574 | 25.22 | 95 |
| 1B-1 | 2083 | 20.41 | 2011 | 19.71 | 100 |
| 1C | 2320 | 22.74 | 2230 | 21.85 | 100 |
| 2A | 1970 | 19.31 | 2008 | 19.68 | 98 |
| 2B | 2033 | 19.92 | 2408 | 23.60 | 84 |

This example demonstrates that Compositions 1B, 1B-1 and 1C according to this invention reach their maximum hardness in 2.5 hours only. This is not the case for the fructose-based composition (Composition 2B), which reached more than 90% of its maximum hardness after 24 hours only.

## Claims

1. Chewing gum composition comprising crystalline allulose particles and optionally an aqueous allulose syrup, wherein said allulose particles have a mean particle size of less than 250 µm.

2. Chewing gum composition according to Claim 1, wherein at least 90% by weight, preferably at least 95% by weight and still preferably 100% by weight, of the allulose particles pass through a sieve with apertures of at most 250 µm, preferably of at most 220 µm.

3. Chewing gum composition according to Claim 1 or 2, wherein the allulose particles have a mean particle size larger than 45 µm.

4. Chewing gum composition according to any of Claims 1 to 3, wherein allulose represents from 40 to 90% by weight, and preferably from 50 to 65% by weight, relative to the total weight of the composition.

5. Chewing gum composition according to any of Claims 1 to 4, which further includes at least one carbohydrate other than allulose, selected from sucrose, fructose, glucose, maltose, trehalose and mixtures thereof, preferably sucrose and/or fructose.

6. Chewing gum composition according to any of Claims 1 to 5, which further comprises a hydrogenated glucose syrup.

7. Use of allulose for increasing the hardening rate of a chewing gum composition.

8. A method for increasing the hardening rate of a chewing gum composition, comprising mixing crystalline allulose particles and optionally an aqueous allulose syrup with a molten gum base and one or more food additives, then kneading said mixture so as to obtain a composition having a hardening rate higher than the same composition without said allulose particles.

9. Process for the manufacture of a chewing gum, comprising the step of mixing crystalline allulose particles and optionally an aqueous allulose syrup with a molten gum base and one or more food additives, so as to obtain a chewing gum composition, wherein said allulose particles have a mean particle size of less than 250 µm.
